# FASCICULE DE BREVET EUROPEEN

(11) **EP 3 786 060 B1**
(45) Date de publication et mention de la délivrance du brevet: **04.01.2023**
(21) Numéro de dépôt: 20181577.6
(22) Date de dépôt: 23.06.2020
(51) Int. Cl.: B64C 27/12, B64C 27/58, B64C 27/59, B64C 27/605, B64C 27/78, F16C 33/66, F16H 57/04, B64C 11/30

(54) **BOITE DE TRANSMISSION DE PUISSANCE, GIRAVION EQUIPÉ D'UNE TELLE BOITE DE TRANSMISSION ET MÉTHODE DE VARIATION DE PAS DES PALES D'UN ROTOR ASSOCIÉE**
LEISTUNGSÜBERTRAGUNGSGETRIEBE, DREHFLÜGELFLUGZEUG, DAS MIT EINEM SOLCHEN LEISTUNGSÜBERTRAGUNGSGETRIEBE AUSGESTATTET IST, UND ENTSPRECHENDE METHODE ZUR VERÄNDERUNG DER ROTORBLATTVERSTELLUNG
GEARBOX, ROTORCRAFT PROVIDED WITH SUCH A GEARBOX AND ASSOCIATED METHOD OF VARIATION OF THE PITCH OF ROTOR BLADES

(30) Priorité: 30.08.2019 FR 1909577
(43) Date de publication de la demande: 03.03.2021
(73) Titulaire: Airbus Helicopters, 13725 Marignane Cedex (FR)
(72) Inventeur: GOUJET, Damien, 13960 SAUSSET LES PINS (FR)
(74) Mandataire: GPI Brevets

(56) Documents cités:
- FR-A1- 2 977 636
- US-A- 4 186 975
- US-A- 5 106 209
- US-A1- 2014 076 662

## Description

La présente invention se rapporte au domaine technique des giravions et plus particulièrement des boites de transmission de puissance équipant les giravions. De telles boites de transmission de puissance permettent notamment de transmettre un couple moteur entre un organe manant et un organe mené, par exemple un tel couple moteur est généré par au moins un moteur tel un turbomoteur, un moteur à pistons ou encore un moteur électrique à un rotor et/ou une hélice propulsive du giravion.

De plus, de telles boites de transmission de puissance peuvent également comprendre un système de variation d'un pas des pales d'un rotor ou d'une hélice propulsive. Un tel système de variation de pas permet ainsi de faire varier un angle d'inclinaison des pales et donc, lorsqu'elle est associée à un rotor arrière d'hélicoptère, de modifier une direction en lacet de cet hélicoptère.

Une boite de transmission de puissance connue comporte une servocommande fixée à un châssis fixe de la boite de transmission de puissance. La servocommande coopère avec une tige de variation de pas et permet de déplacer en translation la tige de variation de pas par rapport au châssis fixe de la boite de transmission de puissance.

Cette tige de variation de pas permet, via une butée à billes appelée par la suite palier de variation de pas et agencée à l'intérieur du châssis fixe, de déplacer en translation un tube tournant de variation de pas, ce tube tournant étant mobile en rotation autour d'un axe OZ par rapport au châssis fixe de la boite de transmission de puissance.

En outre, un détecteur de limaille métallique est présent dans la boite de transmission de puissance pour détecter une présence éventuelle de limaille pouvant résulter d'un écaillage d'une piste de roulement du palier.

De façon générale, et tel décrit dans le document US 2014/076662, il est connu de réaliser une boite de transmission de puissance comportant un système de variation de pas de pales d'un rotor.

Cette boite de transmission comporte également un arbre de sortie mobile en rotation par rapport à un boîtier et lié à une bague intérieure d'un palier.

Un tel système de variation de pas comporte un arbre de commande de pas mobile en translation par rapport au boîtier. Un tel arbre de commande de pas coopère quant à lui avec la bague extérieure du palier.

Par ailleurs, un tel système de variation de pas permet d'acheminer un fluide de lubrification au niveau du palier d'une part au moyen d'un élément de capture d'huile annexe et d'autre part d'un élément d'alimentation en huile coopérant avec l'arbre de sortie.

Un tel élément d'alimentation en huile comporte en outre une vis sans fin permettant de pomper l'huile axialement lors de la rotation relative entre l'élément d'alimentation en huile et une surface coopérant avec celui-ci.

Un telle boite de transmission comporte ainsi un grand nombre pièces complexes à fabriquer et à assembler en elles pour permettre de lubrifier le palier.

Le document US 5 106 209 se rapporte quant à lui à un dispositif de palier comprenant une bague intérieure fendue rotative pouvant être montée sur un arbre de rotor.

Par ailleurs, un tel document décrit l'utilisation d'une première demi-bague intérieure comprenant au moins un passage pilote d'écoulement d'huile s'étendant radialement; une seconde demi-bague intérieure associée à la première demi-bague intérieure au niveau d'une ligne de division. Une pluralité de passages centraux d'amenée d'huile s'étendent alors radialement en étant espacés circonférentiellement les uns des autres.

Le document FR 2 977 636 décrit un dispositif de lubrification d'un palier de turbopropulseur à double hélice. Un fourreau annulaire est ici utilisé pour canaliser de l'huile jusqu'au palier à roulement aval interposé entre un arbre interne et un arbre externe.

Enfin, le document US 4 186 975 décrit un dispositif d'étanchéité et un système de lubrification huile équipant un moyeu de rotor d'un hélicoptère. Un tel dispositif permet d'empêcher les impuretés de pénétrer, sous l'effet de la force centrifuge, dans les paliers de variation de pas des pales.

La présente invention a alors pour objet de proposer une boite de transmission de puissance permettant d'optimiser la détection de limaille. En outre, une telle boite de transmission de puissance comporte une architecture particulière permettant de réaliser une lubrification optimale d'un palier de variation de pas pour optimiser la détection de la limaille générée par l'usure du palier de variation de pas.

L'invention concerne ainsi une boite de transmission de puissance comportant un système de variation de pas de pales d'un rotor, le système de variation de pas comportant :
- un tube tournant de variation de pas mobile en rotation autour d'un axe OZ et en translation selon l'axe OZ, le tube tournant de variation de pas étant solidaire en rotation d'un arbre rotor par rapport à un châssis fixe de la boite de transmission de puissance;
- une tige de variation de pas mobile en translation suivant l'axe OZ par rapport au châssis fixe de la boite de transmission de puissance, et
- un palier de variation de pas comportant une bague intérieure, une bague extérieure et une pluralité d'éléments roulants interposés entre la bague intérieure et la bague extérieure, le palier de variation de pas coopérant à la fois avec la tige de variation de pas et le tube tournant de variation de pas, le palier de variation de pas étant configuré pour transmettre un mouvement de translation suivant l'axe OZ de la tige de variation de pas au tube tournant de variation de pas.

Une telle tige de variation de pas comporte une première extrémité libre solidaire avec la bague extérieure du palier de variation de pas, le tube tournant de variation de pas comporte une seconde extrémité libre solidaire de la bague intérieure du palier de variation de pas et le système de variation de pas comporte un circuit de lubrification acheminant un fluide de lubrification au niveau du palier de variation de pas.

Comme déjà évoqué, une telle boite de transmission de puissance peut être agencée sur un giravion et notamment à l'arrière pour permettre de transmettre un couple moteur à un rotor arrière du giravion. Dans ce cas, la tige de variation de pas permet de modifier le pas des pales du rotor arrière.

Alternativement, une telle boite de transmission de puissance peut également être agencée au niveau d'une structure, telle une aile, formant une excroissance par rapport à un fuselage du giravion. Cette structure s'étend ainsi latéralement par rapport à un plan antéropostérieur du giravion agencé sensiblement verticalement entre une zone avant et une zone arrière du giravion. Dans ce cas, la tige de variation de pas permet de modifier le pas des pales d'une hélice propulsive ou tractive.

Le terme « rotor » utilisé par la suite dans la présente demande désignera tout organe entrainé en rotation et muni de pales participant à la propulsion ou au pilotage du giravion.

Par ailleurs, une telle boite de transmission de puissance permet d'améliorer la lubrification du palier de variation de pas car le tube tournant entraine en rotation la bague intérieure du palier de variation de pas. De cette manière la bague externe du palier de variation de pas est mobile uniquement en translation conjointement avec la tige. Le mouvement de rotation de la bague interne peut faciliter le déplacement du fluide de lubrification pour évacuer la limaille métallique présente dans le palier de variation de pas.

De plus, un tel agencement de la boite de transmission de puissance permet de positionner le palier de variation de pas en dehors de toute pièce mobile en rotation avec le tube tournant de variation de pas. Ainsi, le fluide de lubrification peut, après avoir lubrifié le palier de variation de pas, retomber dans le bain de barbotage sans être soumis à une force centrifuge risquant de ne pas permettre une détection de toute la limaille métallique présente dans la boite de transmission de puissance.

En outre selon un premier aspect, la bague intérieure du palier de variation de pas peut être formée par au moins une pièce indépendante rapportée sur le tube tournant de variation de pas et rendue solidaire de ce tube tournant de variation de pas.

Selon un second aspect, la bague intérieure du palier de variation de pas peut former avec le tube tournant de variation de pas un ensemble monolithique.

Selon un troisième aspect, la bague extérieure du palier de variation de pas peut être formée par au moins une autre pièce indépendante rapportée sur la première extrémité libre de la tige de variation de pas et rendue solidaire de cette tige de variation de pas.

Selon un quatrième aspect, la bague extérieure du palier de variation de pas peut former avec la première extrémité libre de la tige de variation de pas un ensemble monolithique.

Selon l'invention, une telle boite de transmission est remarquable en ce que la première extrémité libre comporte une protubérance externe, une cavité interne et au moins une canalisation qui s'étend radialement entre la protubérance externe et la cavité interne, la ou les canalisations étant configurées pour que le circuit de lubrification achemine par gravité le fluide de lubrification depuis la protubérance externe vers la cavité interne.

Autrement dit, une telle protubérance externe s'étend autour et en recouvrement du palier de variation de pas. La protubérance externe est alors mise en communication fluidique avec la cavité interne grâce à la ou aux canalisations permettant la circulation du fluide de lubrification.

En outre selon une première alternative, une plaque formant collecteur peut être agencée à l'intérieur du châssis fixe de la boite de transmission de puissance. Une telle plaque permet de collecter les projections de fluide de lubrification à l'intérieur de la boite de transmission de puissance et d'orienter ce fluide de lubrification vers la protubérance externe de la tige de variation de pas. Le fluide de lubrification tombe alors par gravité sur la protubérance externe puis dans la ou les canalisations et parvient à l'intérieur de la cavité interne.

Selon une seconde alternative correspondant à une boite de transmission de puissance présentant un système de lubrification pressurisé, la collecte ou l'arrivée d'huile dans la cavité peut également être réalisée au moyen d'une durite et d'un gicleur permettant une alimentation d'huile sous pression.

En pratique, la cavité interne peut comporter une ouverture positionnée à l'intérieur d'une portion creuse du tube tournant de variation de pas, l'ouverture étant configurée pour que le circuit de lubrification achemine par gravité le fluide de lubrification depuis la cavité interne vers la portion creuse.

Ainsi, l'ouverture peut être légèrement évasée pour que le fluide de lubrification puisse tomber par gravité dans la portion creuse en regard. Une telle portion creuse est alors mobile en rotation par rapport au châssis fixe de la boite de transmission de puissance.

Selon un exemple de réalisation de l'invention, la protubérance externe peut présenter une face cylindrique externe d'axe OZ et au moins un lamage de forme allongée ménagé au niveau de la face cylindrique externe, le lamage s'étendant suivant une direction longitudinale D1 parallèle à l'axe OZ, le ou les lamages étant configurés pour collecter le fluide de lubrification et coopérant avec la ou les canalisations.

En d'autres termes, le lamage permet de former un réservoir ouvert au niveau de la face cylindrique externe. Un tel lamage permet ainsi de pouvoir collecter le fluide de lubrification quelle que soit la position de la tige de variation de pas lors de ses déplacements en translation suivant l'axe OZ par rapport au châssis fixe de la boite de transmission de puissance.

En outre, la ou les canalisations peuvent comporter une forme d'entonnoir coopérant avec le lamage pour garantir la bonne circulation par gravité du fluide de lubrification à l'intérieur de la première extrémité libre de la tige de variation de pas.

Avantageusement, la protubérance externe peut présenter au moins une perforation permettant une circulation fluidique par gravité du fluide de lubrification depuis une face cylindrique interne d'axe OZ de la protubérance externe vers la face cylindrique externe d'axe OZ de la protubérance externe, l'une au moins des perforations étant opposée radialement au(x) lamage(s).

En effet, après avoir lubrifié le palier de variation de pas, le fluide de lubrification est acheminé jusqu'à la face cylindrique interne. Le fluide de lubrification peut alors tomber par gravité en bas de cette face cylindrique interne.

Le fluide de lubrification est alors collecté par la ou les perforations orientées sensiblement verticalement pour pouvoir sortir de la protubérance externe par gravité. Le fluide de lubrification peut ensuite tomber par gravité directement ou indirectement dans le fond du châssis fixe de la de transmission de puissance pour former un bain de barbotage de fluide de lubrification.

Au surplus et comme déjà évoqué, une telle sortie du fluide de lubrification, et des particules en suspension qu'il contient, s'effectue en dehors de toutes autres pièces en rotation. De cette manière, l'ensemble des particules peut tomber dans le bain de barbotage et être détecté par un détecteur de limailles.

En pratique, la face cylindrique interne d'axe OZ peut loger la bague extérieure du palier de variation de pas.

Ainsi, la face cylindrique interne d'axe OZ est apte à positionner et à maintenir en position la bague extérieure du palier de variation de pas. Au surplus, des moyens d'arrêt peuvent être agencés dans la face cylindrique interne pour empêcher tout mouvement relatif entre la bague extérieure du palier de variation de pas et la face cylindrique interne.

Selon un autre exemple de réalisation de l'invention, le tube tournant de variation de pas peut comporter au moins un orifice traversant, le ou les orifices traversants s'étendant radialement entre une portion creuse du tube tournant de variation de pas et une portée de la bague intérieure du palier de variation de pas, le ou les orifices traversants étant configurés pour que le circuit de lubrification utilise une force centrifuge pour acheminer le fluide de lubrification depuis la portion creuse du tube tournant de variation de pas vers la bague intérieure du palier de variation de pas.

En outre, de tels orifices traversants peuvent être par exemple au nombre de trois en étant angulairement répartis d'un angle de 120° autour de l'axe OZ.

Avantageusement, le tube tournant de variation de pas peut comporter au moins une première gorge périphérique ménagée au niveau de la portée de la bague intérieure du palier de variation de pas, la ou les premières gorges périphériques étant configurées pour que le circuit de lubrification utilise une force centrifuge pour acheminer le fluide de lubrification depuis le ou les orifices traversants vers une face périphérique interne de la bague intérieure.

Ainsi, la ou les premières gorges périphériques permettent de répartir le fluide de lubrification tout autour de la face périphérique interne de la bague intérieure. La force centrifuge générée par la rotation du tube tournant de variation de pas permet en effet de faire circuler le fluide à l'intérieur du ou des orifices traversants puis dans la ou les premières gorges périphériques.

En pratique, la bague intérieure du palier de variation de pas peut comporter au moins une seconde gorge périphérique ménagée au niveau d'une face périphérique interne de la bague intérieure, la ou les secondes gorges périphériques étant configurées pour que le circuit de lubrification utilise une force centrifuge pour acheminer le fluide de lubrification depuis le ou les orifices traversants vers la face périphérique interne de la bague intérieure.

Comme pour la ou les premières gorges périphériques, cette ou ces secondes gorges périphériques permettent également de répartir le fluide de lubrification tout autour de la face périphérique interne de la bague intérieure. Dans ce cas, la ou les premières gorges périphériques ne sont pas nécessairement ménagées sur le tube tournant au niveau de la portée de la bague intérieure du palier de variation de pas.

Selon un autre aspect de l'invention, la bague intérieure du palier de variation de pas peut comporter deux demi-bagues agencées coaxialement sur l'axe OZ.

Ainsi, la bague intérieure du palier de variation de pas ne présente pas une structure monolithique. Un tel agencement permet notamment de faciliter le montage et l'assemblage du palier de variation de pas dans le système de variation de pas de pales de la boite de transmission de puissance.

Avantageusement, la bague intérieure du palier de variation de pas peut comporter au moins un trou, le ou les trous s'étendant radialement entre une face périphérique interne de la bague intérieure et une face périphérique externe de la bague intérieure, le ou les trous étant configurés pour que le circuit de lubrification utilise une force centrifuge pour acheminer le fluide de lubrification depuis la face périphérique interne vers la face périphérique externe de la bague intérieure.

Autrement dit, le ou les trous permettent au fluide de lubrification de passer au travers de la bague intérieure grâce à la force centrifuge générée par la rotation de la bague intérieure par rapport au châssis fixe. Le fluide de lubrification peut alors être projetée sur une cage à billes et sur les billes tournants à l'intérieur du palier de variation de pas. Le fluide de lubrification peut ainsi circuler à grande vitesse et être réparti sur toute la périphérie du palier de variation de pas et notamment sur toute la surface de deux pistes de roulement de la bague extérieure.

En outre, un tel agencement peut permettre de faciliter l'évacuation des limailles métalliques présentes à l'intérieur du palier de variation de pas pour optimiser une détection du niveau d'usure du palier de variation de pas à l'aide d'un détecteur de limaille.

L'invention se rapporte également à un giravion comportant au moins un rotor muni de pales. Selon l'invention, un tel giravion est remarquable en ce qu'il comporte la boite de transmission de puissance précitée.

Autrement dit, un giravion conforme à l'invention peut comporter une boite de transmission de puissance arrière munie d'une tige de variation de pas solidaire en translation d'une bague extérieure d'un palier de variation de pas.

Un tel agencement permet alors d'utiliser la force centrifuge générée par la rotation du tube tournant pour évacuer, via le fluide de lubrification, la limaille présente à l'intérieur d'un palier de variation de pas.

La présente invention a aussi pour objet une méthode de variation de pas des pales d'un rotor, la méthode de variation de pas comportant des étapes consistant à :
- guider en rotation un tube tournant de variation de pas mobile en rotation autour d'un axe OZ, le tube tournant de variation de pas étant guidé solidairement en rotation avec un arbre rotor par rapport à un châssis fixe d'une boite de transmission de puissance,
- guider en translation une tige de variation de pas mobile en translation suivant l'axe OZ par rapport au châssis fixe de la boite de transmission de puissance, et
- utiliser un palier de variation de pas comportant une bague intérieure, une bague extérieure et une pluralité d'éléments roulants interposés entre la bague intérieure et la bague extérieure, le palier de variation de pas coopérant à la fois avec la tige de variation de pas et le tube tournant de variation de pas, le palier de variation de pas étant configuré pour transmettre un mouvement de translation suivant l'axe OZ de la tige de variation de pas au tube tournant de variation de pas, un tel palier de variation de pas étant configuré pour qu'une translation d'une première extrémité libre de la tige de variation de pas entraine en translation la bague extérieure du palier de variation de pas et pour qu'une translation de la bague intérieure du palier de variation de pas entraine en translation une seconde extrémité libre du tube tournant de variation de pas, la méthode de variation de pas comportant une étape de lubrification pour acheminer un fluide de lubrification au niveau du palier de variation de pas.

En d'autres termes, cette méthode de variation de pas permet d'utiliser la force centrifuge générée par la rotation du tube tournant pour évacuer, via le fluide de lubrification, la limaille présente à l'intérieur d'un palier de variation de pas.

L'étape de lubrification permet donc au fluide de lubrification d'être acheminé et réparti sur toute la périphérie du palier de variation de pas.

Selon l'invention, une telle méthode est remarquable en ce que l'étape de lubrification comporte une première étape de circulation par gravité du fluide de lubrification depuis une face cylindrique externe d'axe OZ d'une protubérance externe de la tige de variation de pas vers une cavité interne de la tige de variation de pas.

Ainsi, la première étape de circulation du fluide de lubrification permet de collecter le fluide lubrification sur la face cylindrique externe d'axe OZ puis de l'acheminer par gravité dans la cavité interne de la tige de variation de pas.

En pratique, l'étape de lubrification peut comporter une deuxième étape de circulation utilisant une force centrifuge pour acheminer le fluide de lubrification depuis une portion creuse du tube tournant de variation de pas vers la bague intérieure du palier de variation de pas.

Cette deuxième étape de circulation du fluide de lubrification permet donc d'amener le fluide de lubrification précisément au niveau de la bague intérieure du palier de variation de pas.

Selon un autre aspect de l'invention, l'étape de lubrification peut comporter une troisième étape de circulation par gravité du fluide de lubrification depuis une face cylindrique interne d'axe OZ d'une protubérance externe de la tige de variation de pas vers une face cylindrique externe d'axe OZ de la protubérance externe.

Cette troisième étape de circulation permet quant à elle de collecter le fluide de lubrification chargé éventuellement en limailles après avoir lubrifié le palier de variation de pas. Le fluide de lubrification tombe alors par gravité jusqu'à un bain de barbotage de fluide de lubrification dans lequel un détecteur de limailles est agencé pour déterminer précisément un taux d'usure du palier de variation de pas.

L'invention et ses avantages apparaîtront avec plus de détails dans le cadre de la description qui suit avec des exemples donnés à titre illustratif en référence aux figures annexées qui représentent :
[Fig 1] la figure 1, une vue schématique de coté d'un giravion conforme à l'invention,
[Fig 2] la figure 2, une vue en coupe d'une boite de transmission de puissance conforme à l'invention,
[Fig 3] la figure 3, une vue en coupe et en perspective d'un système de variation de pas, conformément à l'invention,
[Fig 4] la figure 4, une vue en coupe et en perspective illustrant un détail du système de variation de pas, conformément à l'invention,
[Fig 5] la figure 5, une autre vue en coupe et en perspective d'un système de variation de pas, conformément à l'invention,
[Fig 6] la figure 6, une vue en perspective d'une tige de variation de pas, conformément à l'invention, et
[Fig 7] la figure 7, un schéma de principe illustrant une méthode de variation de pas conforme à l'invention.

Les éléments présents dans plusieurs figures distinctes sont affectés d'une seule et même référence.

Comme déjà évoqué, l'invention se rapporte au domaine des giravions et plus particulièrement des giravions équipés d'au moins une boite de transmission de puissance.

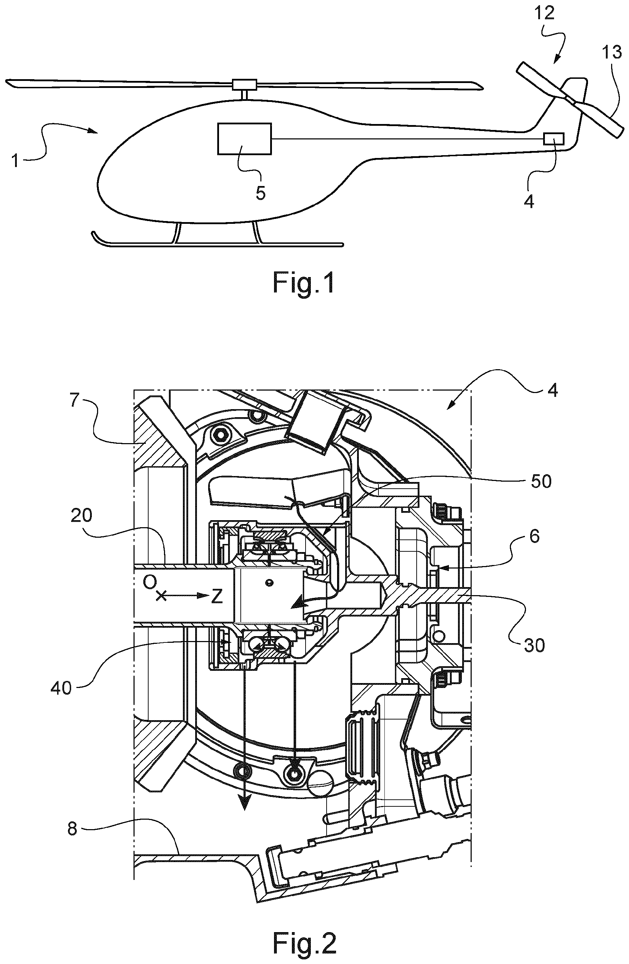

Ainsi tel que représenté à la figure 1, un giravion 1 selon l'invention comporte un ensemble de motorisation 5 et au moins une boite de transmission de puissance 4 permettant de transmettre un couple moteur à au moins un rotor arrière 12 munis de pales 13 pour permettre un pilotage selon une trajectoire en lacet du giravion 1.

Selon l'exemple illustré, une telle boite de transmission de puissance 4 peut être agencée au niveau d'une poutre de queue du giravion 1 et peut alors permettre de transmettre un couple moteur à un rotor arrière 12 pour piloter le giravion 1 selon son axe de lacet. En outre, comme déjà évoqué l'invention ne se limite pas à un tel agencement, la boite de transmission de puissance 4 pouvant également être par exemple agencée au niveau d'une aile ou d'une structure solidaire d'un fuselage du giravion 1.

En outre telle que représentée à la figure 2, une telle boite de transmission de puissance 4 comporte un système de variation de pas 6 de pales 13 du rotor 12. Un tel système de variation de pas 6 permet, par exemple au moyen d'une servocommande non représentée, de piloter le pas de pales 13.

Le système de variation de pas 6 comporte dès lors un tube tournant de variation de pas 20 agencé mobile en rotation autour d'un axe OZ et en translation selon l'axe OZ. En outre, un tel axe OZ correspond à l'axe de rotation du rotor 12. Ce tube tournant de variation de pas 20 est ainsi rendu solidaire en rotation d'un arbre rotor 7 par rapport à un châssis fixe 8 de la boite de transmission de puissance 4.

Un tel système de variation de pas 6 comporte également une tige de variation de pas 30 agencée quant à elle mobile en translation suivant l'axe OZ par rapport au châssis fixe 8.

Le système de variation de pas 6 comporte aussi un palier de variation de pas 40 apte à transmettre un mouvement de translation suivant l'axe OZ de la tige de variation de pas 30 au tube tournant de variation de pas 20.

Au surplus, un tel système de variation de pas 6 comporte également un circuit de lubrification 50 configuré pour acheminer un fluide de lubrification au niveau du palier de variation de pas 40, garantir sa bonne lubrification et pour évacuer toute limaille métallique présente au niveau de ce palier de variation de pas 40.

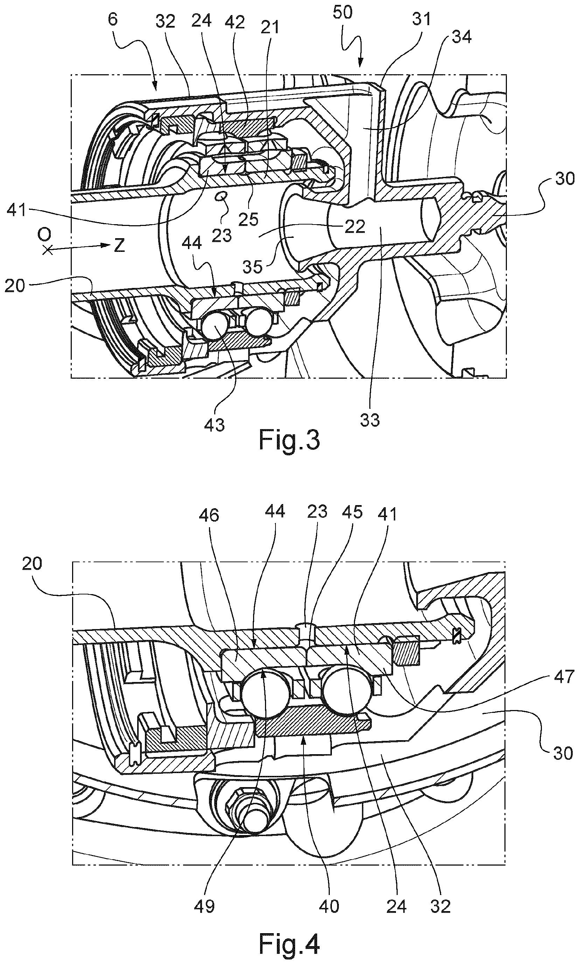

Tel que représenté à la figure 3, le palier de variation de pas 40 comporte donc une bague intérieure 41, une bague extérieure 42 et une pluralité d'éléments roulants 43 interposés entre la bague intérieure 41 et la bague extérieure 42. Ainsi, le palier de variation de pas 40 coopère à la fois avec la tige de variation de pas 30 et le tube tournant de variation de pas 20.

Plus précisément, la tige de variation de pas 30 comporte une première extrémité libre 31 solidarisée à la bague extérieure 42 du palier de variation de pas 40. De même, le tube tournant de variation de pas 20 comporte une seconde extrémité libre 21 solidarisée avec la bague intérieure 41 du palier de variation de pas 40. La pluralité d'éléments roulants 43 permettent alors de transmettre tout déplacement en translation de la bague extérieure 42 piloté par la tige de variation de pas 30 à la bague intérieure 41 et donc au tube tournant de variation de pas 20.

Selon un autre aspect, la première extrémité libre 31 peut présenter une protubérance externe 32 et une cavité interne 33. La protubérance externe 32 s'étend autour de la cavité interne 33 et au moins une canalisation 34 permet de mettre en communication fluidique la protubérance externe 32 et la cavité interne 33. En outre, une telle canalisation 34 est alors agencée radialement par rapport à l'axe OZ et est configurée pour que le circuit de lubrification 50 puisse acheminer par gravité le fluide de lubrification depuis la protubérance externe 32 vers la cavité interne 33. Ainsi, par rapport au sol, la canalisation 34 est agencée au dessus de la cavité interne 33.

Par ailleurs, une telle canalisation 34 peut être évasée au niveau d'une face externe de la protubérance externe 32. Un tel agencement permet ainsi d'optimiser la quantité de fluide de lubrification captée par cette canalisation 34.

En outre, la cavité interne 33 peut quant à lui comporter une ouverture 35 positionnée à l'intérieur d'une portion creuse 22 du tube tournant de variation de pas 20. Cette ouverture 35 permet ainsi au circuit de lubrification 50 d'acheminer par gravité le fluide de lubrification depuis la cavité interne 33 vers la portion creuse 22.

Selon un autre aspect de l'invention, le tube tournant de variation de pas 20 peut comporter au moins un orifice traversant 23. En outre, un tel orifice traversant 23 s'étend alors radialement entre la portion creuse 22 du tube tournant de variation de pas 20 et une portée 24 recevant la bague intérieure 41 du palier de variation de pas 40. L'orifice traversant 23 permet alors au circuit de lubrification 50 d'utiliser une force centrifuge pour acheminer le fluide de lubrification depuis la portion creuse 22 du tube tournant de variation de pas 20 vers la bague intérieure 41 du palier de variation de pas 40.

En outre et tel que représenté, le tube tournant de variation de pas 20 peut comporter une première gorge périphérique 25 ménagée au niveau de la portée 24. Une telle première gorge périphérique 25 permet alors au circuit de lubrification 50 d'utiliser une force centrifuge pour acheminer le fluide de lubrification depuis l'orifice traversant 23 vers une face périphérique interne 44 de la bague intérieure 41.

Tel que représenté à la figure 4, la bague intérieure 41 du palier de variation de pas 40 peut présenter deux demi-bagues 46 et 47 agencées coaxialement sur l'axe OZ l'une contre l'autre.

Par ailleurs telle que représentée, la bague intérieure 41 du palier de variation de pas 40 comporte une seconde gorge périphérique 45 ménagée au niveau d'une face périphérique interne 44 de la bague intérieure 41 et à la jonction entre les deux demi-bagues 46 et 47. Une telle seconde gorge périphérique 45 permet alors au circuit de lubrification 50 d'utiliser une force centrifuge pour acheminer le fluide de lubrification depuis les orifices traversants 23 vers la face périphérique interne 44 de la bague intérieure 41.

De plus, la bague intérieure 41 comporte une piste de roulement au niveau d'une face périphérique externe 49. Une telle piste de roulement permet alors à la pluralité d'éléments roulants 43 de rouler sans frottement sur la bague intérieure 41 en étant lubrifiés par le fluide de lubrification.

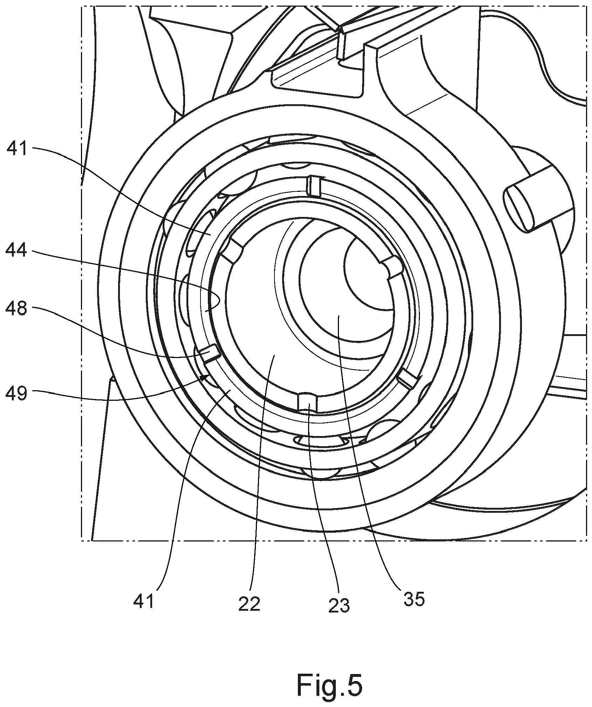

En outre, telle que représentée à la figure 5, la bague intérieure 41 du palier de variation de pas 40 peut comporter trois trous 48. Chaque trou 48 s'étend alors radialement entre la face périphérique interne 44 de la bague intérieure 41 et la face périphérique externe 49 de cette bague intérieure 41. Ces trois trous 48 permet ainsi au circuit de lubrification 50 d'utiliser une force centrifuge pour acheminer le fluide de lubrification depuis la face périphérique interne 44 vers la face périphérique externe 49 de la bague intérieure 41.

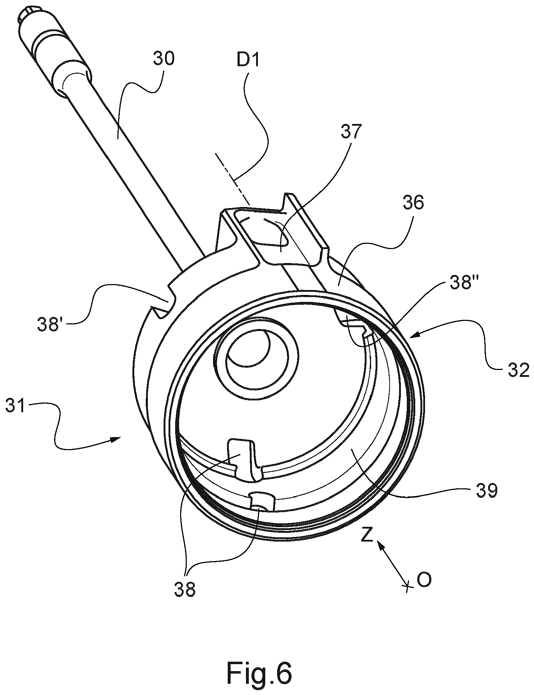

Selon un autre aspect et telle que représentée à la figure 6, la protubérance externe 32 de la tige de variation de pas 30 présente une face cylindrique externe 36 d'axe OZ. Cette protubérance externe 32 peut également présenter un lamage 37 de forme allongée émergeant au niveau de la face cylindrique externe 36. Ainsi, un tel lamage 37 s'étend alors suivant une direction longitudinale D1 parallèle à l'axe OZ. Ce lamage 37 permet de collecter le fluide de lubrification sur le dessus de la protubérance externe 32. Un tel lamage 37 est mis en communication fluidique avec la canalisation 34.

Par ailleurs, la protubérance externe 32 peut aussi présenter quatre perforations 38, 38', 38" permettant une circulation fluidique par gravité, voire également en utilisant une force centrifuge, du fluide de lubrification depuis une face cylindrique interne 39 d'axe OZ de la protubérance externe 32 vers la face cylindrique externe 36. Telles que représentées, les deux perforations 38 sont avantageusement positionnées de façon diamétralement opposée par rapport au lamage 37.

De plus, une telle face cylindrique interne 39 d'axe OZ permet de recevoir la bague extérieure 42 du palier de variation de pas 40. Une fois mise en place dans la face cylindrique interne 39 d'axe OZ, la bague extérieure 42 est alors positionnée de part et d'autre des deux perforations 38 pour permettre une circulation optimale du fluide de lubrification de chaque côté du palier de variation de pas 40.

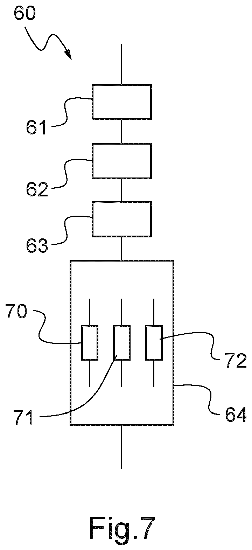

Telle que représentée à la figure 7, l'invention se rapporte également à une méthode de variation de pas 60 des pales 13 d'un rotor 12. En outre, une telle méthode de variation de pas 60 comporte notamment une étape consistant à guider en rotation 61 un tube tournant de variation de pas 20 mobile en rotation autour d'un axe OZ. Comme déjà évoqué, un tel tube tournant de variation de pas 20 est alors guidé solidairement en rotation avec un arbre rotor 7 par rapport à un châssis fixe 8 d'une boite de transmission de puissance 4.

La méthode de variation de pas 60 comporte ensuite une étape consistant à guider en translation 62 une tige de variation de pas 30 mobile en translation suivant l'axe OZ par rapport au châssis fixe 8 et une étape 63 d'utilisation d'un palier de variation de pas 40 comportant une bague intérieure 41, une bague extérieure 42 et une pluralité d'éléments roulants 43 interposés entre cette bague intérieure 41 et cette bague extérieure 42.

Selon cette méthode, on utilise un palier de variation de pas 40 configuré pour qu'une translation d'une première extrémité libre 31 de la tige de variation de pas 30 entraine en translation la bague extérieure 42 et pour qu'une translation de la bague intérieure 41 entraine en translation une seconde extrémité libre 21 du tube tournant de variation de pas 20.

Selon l'invention, une telle méthode de variation de pas 60 comporte une étape de lubrification 64 pour acheminer un fluide de lubrification au niveau du palier de variation de pas 40.

En outre, cette étape de lubrification 64 peut par exemple comporter une première étape 70 de circulation par gravité du fluide de lubrification depuis la face cylindrique externe 36 d'axe OZ de la protubérance externe 32 de la tige de variation de pas 30 vers une cavité interne 33 de la tige de variation de pas 30.

Selon un autre aspect, une telle étape de lubrification 64 peut également comporter une deuxième étape 71 de circulation par centrifugation du fluide de lubrification depuis la portion creuse 22 du tube tournant de variation de pas 20 vers la bague intérieure 41 du palier de variation de pas 40.

Enfin, l'étape de lubrification 64 peut aussi comporter une troisième étape 72 de circulation par gravité du fluide de lubrification depuis la face cylindrique interne 39 d'axe OZ de la protubérance externe 32 de la tige de variation de pas 30 vers la face cylindrique externe 36 d'axe OZ de la protubérance externe 32.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable d'apporter des changements et des modifications sans s'écarter de la présente invention, l'invention étant définie par les revendications annexées.

## Revendications

1. Boite de transmission de puissance (4) comportant un système de variation de pas (6) de pales (13) d'un rotor (12), ledit système de variation de pas (6) comportant :
• un tube tournant de variation de pas (20) mobile en rotation autour d'un axe OZ et en translation selon l'axe OZ, ledit tube tournant de variation de pas (20) étant solidaire en rotation d'un arbre rotor (7) par rapport à un châssis fixe (8) de ladite boite de transmission de puissance (4);
• une tige de variation de pas (30) mobile en translation suivant ledit axe OZ par rapport audit châssis fixe (8) de ladite boite de transmission de puissance (4), et
• un palier de variation de pas (40) comportant une bague intérieure (41), une bague extérieure (42) et une pluralité d'éléments roulants (43) interposés entre ladite bague intérieure (41) et ladite bague extérieure (42), ledit palier de variation de pas (40) coopérant à la fois avec ladite tige de variation de pas (30) et ledit tube tournant de variation de pas (20), ledit palier de variation de pas (40) étant configuré pour transmettre un mouvement de translation suivant ledit axe OZ de ladite tige de variation de pas (30) audit tube tournant de variation de pas (20),
ladite tige de variation de pas (30) comportant une première extrémité libre (31) solidaire avec ladite bague extérieure (42) dudit palier de variation de pas (40), ledit tube tournant de variation de pas (20) comportant une seconde extrémité libre (21) solidaire de ladite bague intérieure (41) dudit palier de variation de pas (40) et ledit système de variation de pas (6) comportant un circuit de lubrification (50) acheminant un fluide de lubrification au niveau dudit palier de variation de pas (40),
**caractérisée en ce que** ladite première extrémité libre (31) comporte une protubérance externe (32), une cavité interne (33) et au moins une canalisation (34) s'étendant radialement entre ladite protubérance externe (32) et ladite cavité interne (33), ladite au moins une canalisation (34) étant configurée pour que ledit circuit de lubrification (50) achemine par gravité ledit fluide de lubrification depuis ladite protubérance externe (32) vers ladite cavité interne (33).

2. Boite de transmission selon la revendication 1,
**caractérisée en ce que** ladite cavité interne (33) comporte une ouverture (35) positionnée à l'intérieur d'une portion creuse (22) dudit tube tournant de variation de pas (20), ladite ouverture (35) étant configurée pour que ledit circuit de lubrification (50) achemine par gravité ledit fluide de lubrification depuis ladite cavité interne (33) vers ladite portion creuse (22).

3. Boite de transmission selon l'une quelconque des revendications 1 à 2,
**caractérisée en ce que** ladite protubérance externe (32) présente une face cylindrique externe (36) d'axe OZ et au moins un lamage (37) de forme allongée ménagé au niveau de ladite face cylindrique externe (36), ledit lamage (37) s'étendant suivant une direction longitudinale D1 parallèle audit axe OZ, ledit au moins un lamage (37) étant configuré pour collecter ledit fluide de lubrification et coopérant avec ladite au moins une canalisation (34).

4. Boite de transmission selon la revendication 3,
**caractérisée en ce que** ladite protubérance externe (32) présente au moins une perforation (38, 38', 38") permettant une circulation fluidique par gravité dudit fluide de lubrification depuis une face cylindrique interne (39) d'axe OZ de ladite protubérance externe (32) vers ladite face cylindrique externe (36) d'axe OZ de ladite protubérance externe (32), l'une au moins desdites au moins une perforation (38) étant opposée radialement audit au moins un lamage (37).

5. Boite de transmission selon la revendication 4,
**caractérisée en ce que** ladite face cylindrique interne (39) d'axe OZ loge ladite bague extérieure (42) dudit palier de variation de pas (40).

6. Boite de transmission selon l'une quelconque des revendications 1 à 5,
**caractérisée en ce que** ledit tube tournant de variation de pas (20) comporte au moins un orifice traversant (23), ledit au moins un orifice traversant (23) s'étendant radialement entre une portion creuse (22) dudit tube tournant de variation de pas (20) et une portée (24) de ladite bague intérieure (41) dudit palier de variation de pas (40), ledit au moins un orifice traversant (23) étant configuré pour que ledit circuit de lubrification (50) utilise une force centrifuge pour acheminer ledit fluide de lubrification depuis ladite portion creuse (22) dudit tube tournant de variation de pas (20) vers ladite bague intérieure (41) dudit palier de variation de pas (40).

7. Boite de transmission selon la revendication 6,
**caractérisée en ce que** ledit tube tournant de variation de pas (20) comporte au moins une première gorge périphérique (25) ménagée au niveau de ladite portée (24) de ladite bague intérieure (41) dudit palier de variation de pas (40), ladite au moins une première gorge périphérique (25) étant configurée pour que ledit circuit de lubrification (50) utilise une force centrifuge pour acheminer ledit fluide de lubrification depuis ledit au moins un orifice traversant (23) vers une face périphérique interne (44) de ladite bague intérieure (41).

8. Boite de transmission selon l'une quelconque des revendications 6 à 7,
**caractérisée en ce que** ladite bague intérieure (41) dudit palier de variation de pas (40) comporte au moins une seconde gorge périphérique (45) ménagée au niveau d'une face périphérique interne (44) de ladite bague intérieure (41), ladite au moins une seconde gorge périphérique (45) étant configurée pour que ledit circuit de lubrification (50) utilise une force centrifuge pour acheminer ledit fluide de lubrification depuis ledit au moins un orifice traversant (23) vers ladite face périphérique interne (44) de ladite bague intérieure (41).

9. Boite de transmission selon l'une quelconque des revendications 1 à 8,
**caractérisé en ce que** ladite bague intérieure (41) dudit palier de variation de pas (40) comporte deux demi-bagues (46 et 47) agencées coaxialement sur ledit axe OZ.

10. Boite de transmission selon l'une quelconque des revendications 1 à 9,
**caractérisée en ce que** ladite bague intérieure (41) dudit palier de variation de pas (40) comporte au moins un trou (48), ledit au moins un trou (48) s'étendant radialement entre une face périphérique interne (44) de ladite bague intérieure (41) et une face périphérique externe (49) de ladite bague intérieure (41), ledit au moins un trou (48) étant configuré pour que ledit circuit de lubrification (50) utilise une force centrifuge pour acheminer ledit fluide de lubrification depuis ladite face périphérique interne (44) vers ladite face périphérique externe (49) de ladite bague intérieure (41).

11. Giravion (1) comportant au moins un rotor (12) muni de pales (13) **caractérisé en ce que** ledit giravion (1) comporte une boite de transmission de puissance (4) selon l'une quelconque des revendications 1 à 10.

12. Méthode de variation de pas (60) des pales (13) d'un rotor (12), ladite méthode de variation de pas (60) comportant des étapes consistant à :
• guider en rotation (61) un tube tournant de variation de pas (20) mobile en rotation autour d'un axe OZ, ledit tube tournant de variation de pas (20) étant guidé solidairement en rotation avec un arbre rotor (7) par rapport à un châssis fixe (8) d'une boite de transmission de puissance (4),
• guider en translation (62) une tige de variation de pas (30) mobile en translation suivant ledit axe OZ par rapport audit châssis fixe (8) de ladite boite de transmission de puissance (4), et
utiliser (63) un palier de variation de pas (40) comportant une bague intérieure (41), une bague extérieure (42) et une pluralité d'éléments roulants (43) interposés entre ladite bague intérieure (41) et ladite bague extérieure (42), ledit palier de variation de pas (40) coopérant à la fois avec ladite tige de variation de pas (30) et ledit tube tournant de variation de pas (20), ledit palier de variation de pas (40) étant configuré pour transmettre un mouvement de translation suivant ledit axe OZ de ladite tige de variation de pas (30) audit tube tournant de variation de pas (20), ledit palier de variation de pas (40) étant configuré pour qu'une translation d'une première extrémité libre (31) de ladite tige de variation de pas (30) entraine en translation ladite bague extérieure (42) dudit palier de variation de pas (40) et pour qu'une translation de ladite bague intérieure (41) dudit palier de variation de pas (40) entraine en translation une seconde extrémité libre (21) dudit tube tournant de variation de pas (20), ladite méthode de variation de pas (60) comportant une étape de lubrification (64) pour acheminer un fluide de lubrification au niveau dudit palier de variation de pas (40),
**caractérisée en ce que** ladite étape de lubrification (64) comporte une première étape (70) de circulation par gravité dudit fluide de lubrification depuis une face cylindrique externe (36) d'axe OZ d'une protubérance externe (32) de ladite tige de variation de pas (30) vers une cavité interne (33) de ladite tige de variation de pas (30).

13. Méthode de variation selon la revendication 12, **caractérisée en ce que** ladite étape de lubrification (64) comporte une deuxième étape (71) de circulation utilisant une force centrifuge pour acheminer ledit fluide de lubrification depuis une portion creuse (22) dudit tube tournant de variation de pas (20) vers ladite bague intérieure (41) dudit palier de variation de pas (40).

14. Méthode de variation selon l'une quelconque des revendications 12 à 13,
**caractérisée en ce que** ladite étape de lubrification (64) comporte une troisième étape (72) de circulation par gravité dudit fluide de lubrification depuis une face cylindrique interne (39) d'axe OZ d'une protubérance externe (32) de ladite tige de variation de pas (30) vers une face cylindrique externe (36) d'axe OZ de ladite protubérance externe (32).

## Patentansprüche

1. Leistungsübertragungsgetriebe (4) mit einem Anstellwinkelverstellsystem (6) für Blätter (13) eines Rotors (12), wobei das Anstellwinkelverstellsystem (6) umfasst :
- ein Anstellwinkelverstelldrehrohr (20), das um eine Achse OZ drehbar und entlang der Achse OZ translatorisch beweglich ist, wobei das Anstellwinkelverstelldrehrohr (20) relativ zu einem festen Rahmen (8) des Leistungsübertragungsgetriebes (4) drehfest mit einer Rotorwelle (7) verbunden ist;
- eine Anstellwinkelverstellstange (30), die entlang der Achse OZ in Bezug auf den festen Rahmen (8) des Leistungsübertragungsgetriebes (4) translatorisch beweglich ist, und
- ein Anstellwinkelverstelllager (40), das einen Innenring (41), einen Außenring (42) und eine Mehrzahl von Wälzkörpern (43) umfasst, die zwischen dem Innenring (41) und dem Außenring (42) angeordnet sind, wobei das Anstellwinkelverstelllager (40) sowohl mit der Anstellwinkelverstellstange (30) als auch mit dem Anstellwinkelverstelldrehrohr (20) zusammenwirkt, wobei das Anstellwinkelverstelllager (40) konfiguriert ist, um eine Translationsbewegung entlang der OZ-Achse von der Anstellwinkelverstellstange (30) auf das Anstellwinkelverstelldrehrohr (20) zu übertragen,
wobei die Anstellwinkelverstellstange (30) ein erstes freies Ende (31) aufweist, das mit dem Außenring (42) des Anstellwinkelverstelllagers (40) fest verbunden ist, wobei das Anstellwinkelverstelldrehrohr (20) ein zweites freies Ende (21) aufweist, das mit dem Innenring (41) des Anstellwinkelverstelllagers (40) fest verbunden ist, und wobei das Anstellwinkelverstellsystem (6) einen Schmiermittelkreislauf (50) aufweist, der ein Schmierfluid zum Anstellwinkelverstelllager (40) befördert,
**dadurch gekennzeichnet, dass** das erste freie Ende (31) einen äußeren Vorsprung (32), einen inneren Hohlraum (33) und mindestens eine Leitung (34) aufweist, die sich radial zwischen dem äußeren Vorsprung (32) und dem inneren Hohlraum (33) erstreckt, wobei die mindestens eine Leitung (34) so konfiguriert ist, dass der Schmiermittelkreislauf (50) das Schmiermittel durch Schwerkraft von dem äußeren Vorsprung (32) zu dem inneren Hohlraum (33) leitet.

2. Getriebe nach Anspruch 1,
**dadurch gekennzeichnet, dass** der innere Hohlraum (33) eine Öffnung (35) aufweist, die innerhalb eines hohlen Abschnitts (22) des Anstellwinkelverstelldrehrohrs (20) positioniert ist, wobei die Öffnung (35) so konfiguriert ist, dass der Schmiermittelkreislauf (50) durch Schwerkraft das Schmierfluid von dem inneren Hohlraum (33) zu dem hohlen Abschnitt (22) leitet.

3. Getriebe nach einem der Ansprüche 1 bis 2,
**dadurch gekennzeichnet, dass** der äußere Vorsprung (32) eine zylindrische Außenfläche (36) mit Achse OZ und mindestens eine längliche Senkung (37) aufweist, die auf Höhe der zylindrischen Außenfläche (36) ausgebildet ist, wobei sich die Senkung (37) in einer Längsrichtung D1 parallel zur Achse OZ erstreckt, wobei die mindestens eine Senkung (37) konfiguriert ist, um das Schmierfluid zu sammeln, und mit der mindestens einen Leitung (34) zusammenwirkt.

4. Getriebe nach Anspruch 3,
**dadurch gekennzeichnet, dass** der äußere Vorsprung (32) mindestens eine Perforation (38, 38', 38") aufweist, die eine Fluidzirkulation des Schmierfluids durch Schwerkraft von einer zylindrischen Innenfläche (39) mit Achse OZ des äußeren Vorsprungs (32) zu der zylindrischen Außenfläche (36) mit Achse OZ des äußeren Vorsprungs (32) ermöglicht, wobei mindestens eine der mindestens einen Perforation (38) der mindestens einen Senkung (37) radial gegenüberliegt.

5. Getriebe nach Anspruch 4,
**dadurch gekennzeichnet, dass** die zylindrische Innenfläche (39) mit der Achse OZ den Außenring (42) des Anstellwinkelverstelllagers (40) aufnimmt.

6. Getriebe nach einem der Ansprüche 1 bis 5,
**dadurch gekennzeichnet, dass** das Anstellwinkelverstelldrehrohr (20) mindestens eine Durchgangsöffnung (23) aufweist, wobei sich die mindestens eine Durchgangsöffnung (23) radial zwischen einem hohlen Abschnitt (22) des Anstellwinkelverstelldrehrohrs (20) und einem Sitz (24) des Innenrings (41) des Anstellwinkelverstelllagers (40) erstreckt, wobei die mindestens eine Durchgangsöffnung (23) so konfiguriert ist, dass der Schmiermittelkreislauf (50) eine Zentrifugalkraft nutzt, um das Schmiermittel von dem hohlen Abschnitt (22) des sich drehenden Anstellwinkelverstelldrehrohrs (20) zu dem Innenring (41) des Anstellwinkelverstelllagers (40) zu befördern.

7. Getriebegehäuse nach Anspruch 6,
**dadurch gekennzeichnet, dass** das Anstellwinkelverstelldrehrohr (20) mindestens eine erste Umfangsnut (25) aufweist, die an dem Sitz (24) des Innenrings (41) des Anstellwinkelverstelllagers (40) vorgesehen ist, wobei die mindestens eine erste Umfangsnut (25) so konfiguriert ist, dass der Schmierkreislauf (50) eine Zentrifugalkraft nutzt, um das Schmierfluid von der mindestens einen Durchgangsöffnung (23) zu einer inneren Umfangsfläche (44) des Innenrings (41) zu leiten.

8. Getriebegehäuse nach einem der Ansprüche 6 bis 7,
**dadurch gekennzeichnet, dass** der Innenring (41) des Anstellwinkelverstelllagers (40) mindestens eine zweite Umfangsnut (45) aufweist, die an einer inneren Umfangsfläche (44) des Innenrings (41) ausgebildet ist, wobei die mindestens eine zweite Umfangsnut (45) so konfiguriert ist, dass der Schmierkreislauf (50) eine Zentrifugalkraft verwendet, um das Schmierfluid von der mindestens einen Durchgangsöffnung (23) zu der inneren Umfangsfläche (44) des Innenrings (41) zu leiten.

9. Getriebe nach einem der Ansprüche 1 bis 8,
**dadurch gekennzeichnet, dass** der Innenring (41) des Anstellwinkelverstelllagers (40) zwei Halbringe (46 und 47) aufweist, die koaxial zu der OZ-Achse angeordnet sind.

10. Getriebe nach einem der Ansprüche 1 bis 9,
**dadurch gekennzeichnet, dass** der Innenring (41) des Anstellwinkelverstelllagers (40) mindestens ein Loch (48) aufweist, wobei sich das mindestens eine Loch (48) radial zwischen einer inneren Umfangsfläche (44) des Innenrings (41) und einer äußeren Umfangsfläche (49) des Innenrings (41) erstreckt, wobei das mindestens eine Loch (48) so konfiguriert ist, dass der Schmiermittelkreislauf (50) eine Zentrifugalkraft nutzt, um das Schmiermittel von der inneren Umfangsfläche (44) zu der äußeren Umfangsfläche (49) des Innenrings (41) zu leiten.

11. Drehflügelflugzeug (1) mit mindestens einem mit Blättern (13) versehenen Rotor (12), **dadurch gekennzeichnet, dass** das Drehflügelflugzeug (1) ein Leistungsübertragungsgetriebe (4) nach einem der Ansprüche 1 bis 10 aufweist.

12. Verfahren zum Verstellen des Anstellwinkels (60) der Blätter (13) eines Rotors (12), wobei das Verfahren zum Verändern des Anstellwinkels (60) Schritte umfasst, die bestehen im:
- Drehführen (61) eines um eine Achse OZ drehbaren Anstellwinkelverstelldrehrohrs (20), wobei das Anstellwinkelverstelldrehrohr (20) relativ zu einem festen Rahmen (8) eines Leistungsübertragungsgetriebes (4) drehfest mit einer Rotorwelle (7) verbunden geführt wird,
- translatorisches Führen (62) einer Anstellwinkelverstellstange (30), die entlang der Achse OZ in Bezug auf den festen Rahmen (8) des Leistungsübertragungsgetriebes (4) translatorisch beweglich ist, und
Verwenden (63) eines Anstellwinkelverstelllagers (40) mit einem Innenring (41), einem Außenring (42) und einer Mehrzahl von zwischen dem Innenring (41) und dem Außenring (42) eingefügten Wälzkörpern (43), wobei das Anstellwinkelverstelllager (40) sowohl mit der Anstellwinkelverstellstange (30) als auch mit dem Anstellwinkelverstelldrehrohr (20) zusammenwirkt, wobei das Anstellwinkelverstelllager (40) konfiguriert ist, um eine Translationsbewegung entlang der OZ-Achse von der Anstellwinkelverstellstange (30) auf das Anstellwinkelverstelldrehrohr (20) zu übertragen, wobei das Anstellwinkelverstelllager (40) so konfiguriert ist, dass eine Translation eines ersten freien Endes (31) der Anstellwinkelverstellstange (30) den Außenring (42) des Anstellwinkelverstelllagers (40) translatorisch antreibt und dass eine Translation des Innenrings (41) des Anstellwinkelverstelllagers (40) ein zweites freies Ende (21) des Anstellwinkeldrehrohrs (20) translatorisch antreibt, wobei das Verfahren zum Verstellen des Anstellwinkels (60) einen Schmierschritt (64) zum Zuführen eines Schmierfluids an das Anstellwinkelverstelllager (40) umfasst,
**dadurch gekennzeichnet, dass** der Schmierschritt (64) einen ersten Schritt (70) des Umwälzens des Schmierfluids durch Schwerkraft von einer zylindrischen Außenfläche (36) mit der Achse OZ eines Außenvorsprungs (32) der Anstellwinkelverstellstange (30) zu einem inneren Hohlraum (33) der Anstellwinkelverstellstange (30) umfasst.

13. Verstellverfahren nach Anspruch 12,
**dadurch gekennzeichnet, dass** der Schmierschritt (64) einen zweiten Umwälzschritt (71) umfasst, der eine Zentrifugalkraft nutzt, um das Schmierfluid von einem hohlen Abschnitt (22) des drehbaren Anstellwinkelverstelldrehrohrs (20) zu dem Innenring (41) des Anstellwinkelverstelllagers (40) zu leiten.

14. Verstellverfahren nach einem der Ansprüche 12 bis 13,
**dadurch gekennzeichnet, dass** der Schmierschritt (64) einen dritten Schritt (72) umfasst, bei dem das Schmierfluid durch Schwerkraft von einer zylindrischen Innenfläche (39) mit der Achse OZ eines äußeren Vorsprungs (32) der Anstellwinkelverstellstange (30) zu einer zylindrischen Außenfläche (36) mit der Achse OZ des äußeren Vorsprungs (32) umgewälzt wird.

## Claims

1. Gearbox (4) comprising a system (6) of variation of the pitch of blades (13) of a rotor (12), said system (6) of variation of pitch comprising:
• a rotating tube (20) of variation of pitch rotationally mobile around an axis OZ and translationally mobile along the axis OZ, said rotating tube (20) of variation of pitch being rotationally integral with a rotor shaft (7) with respect to a fixed chassis (8) of said gearbox (4),
• a rod (30) of variation of pitch translationally mobile along said axis OZ with respect to said fixed chassis (8) of said gearbox (4), and
• a bearing (40) of variation of pitch comprising an inside ring (41), an outside ring (42) and a plurality of rolling elements (43) interposed between said inside ring (41) and said outside ring (42), said bearing (40) of variation of pitch cooperating both with said rod (30) of variation of pitch and said rotating tube (20) of variation of pitch, said bearing (40) of variation of pitch being configured to transmit a translation movement along said axis OZ of said rod (30) of variation of pitch to said rotating tube (20) of variation of pitch,
said rod (30) of variation of pitch comprising a first free end (31) integral with said outside ring (42) of said bearing (40) of variation of pitch, said rotating tube (20) of variation of pitch comprising a second free end (21) integral with said inside ring (41) of said bearing (40) of variation of pitch and said system (6) of variation of pitch comprising a lubrication circuit (50) piping a lubrication fluid at said bearing (40) of variation of pitch,
**characterised in that** said first free end (31) comprises an external protuberance (32), an internal cavity (33) and at least one pipe (34) extending radially between said external protuberance (32) and said internal cavity (33), said at least one pipe (34) being configured so that said lubrication circuit (50) pipes by gravity said lubrication fluid from said external protuberance (32) to said internal cavity (33).

2. Gearbox according to claim 1,
**characterised in that** said internal cavity (33) comprises an opening (35) positioned inside a hollow portion (22) of said rotating tube (20) of variation of pitch, said opening (35) being configured so that said lubrication circuit (50) pipes by gravity said lubrication fluid from said internal cavity (33) to said hollow portion (22).

3. Gearbox according to either one of claims 1 to 2,
**characterised in that** said external protuberance (32) has an external cylindrical face (36) of axis OZ and at least one counterbore (37) of an elongated shape provided at said external cylindrical face (36), said counterbore (37) extending in a longitudinal direction D1 parallel to said axis OZ, said at least one counterbore (37) being configured to collect said lubrication fluid and cooperating with said at least one pipe (34).

4. Gearbox according to claim 3,
**characterised in that** said external protuberance (32) has at least one perforation (38, 38', 38") allowing a fluidic circulation by gravity of said lubrication fluid from an internal cylindrical face (39) of axis OZ of said external protuberance (32) to said external cylindrical face (36) of axis OZ of said external protuberance (32), at least one of said at least one perforation (38) being radially opposite said at least one counterbore (37).

5. Gearbox according to claim 4
**characterised in that** said internal cylindrical face (39) of axis OZ accommodates said outside ring (42) of said bearing (40) of variation of pitch.

6. Gearbox according to any one of claims 1 to 5,
**characterised in that** said rotating tube (20) of variation of pitch comprises at least one through orifice (23), said at least one through orifice (23) extending radially between a hollow portion (22) of said rotating tube (20) of variation of pitch and a supporting surface (24) of said inside ring (41) of said bearing (40) of variation of pitch, said at least one through orifice (23) being configured so that said lubrication circuit (50) uses a centrifugal force to pipe said lubrication fluid from said hollow portion (22) of said rotating tube (20) of variation of pitch to said inside ring (41) of said bearing (40) of variation of pitch.

7. Gearbox according to claim 6
**characterised in that** said rotating tube (20) of variation of pitch comprises at least one first peripheral groove (25) provided at said supporting surface (24) of said inside ring (41) of said bearing (40) of variation of pitch, said at least one first peripheral groove (25) being configured so that said lubrication circuit (50) uses a centrifugal force to pipe said lubrication fluid from said at least one through orifice (23) to an internal peripheral face (44) of said inside ring (41).

8. Gearbox according to either one of claims 6 to 7,
**characterised in that** said inside ring (41) of said bearing (40) of variation of pitch comprises at least one second peripheral groove (45) provided at an internal peripheral face (44) of said inside ring (41), said at least one second peripheral groove (45) being configured so that said lubrication circuit (50) uses a centrifugal force to pipe said lubrication fluid from said at least one through orifice (23) to said internal peripheral face (44) of said inside ring (41).

9. Gearbox according to any one of claims 1 to 8,
**characterised in that** said inside ring (41) of said bearing (40) of variation of pitch comprises two half rings (46 and 47) arranged coaxially on said axis OZ.

10. Gearbox according to any one of claims 1 to 9,
**characterised in that** said inside ring (41) of said bearing (40) of variation of pitch comprises at least one hole (48), said at least one hole (48) extending radially between an internal peripheral face (44) of said inside ring (41) and an external peripheral face (49) of said inside ring (41), said at least one hole (48) being configured so that said lubrication circuit (50) uses a centrifugal force to pipe said lubrication fluid from said internal peripheral face (44) to said external peripheral face (49) of said inside ring (41).

11. Rotorcraft (1) comprising at least one rotor (12) equipped with blades (13) **characterised in that** said rotorcraft (1) comprises a gearbox (4) according to any one of claims 1 to 10.

12. Method (60) of variation of the pitch of the blades (13) of a rotor (12), said method (60) of variation of pitch comprising steps consisting of:
• guiding (61) the rotation of a rotating tube (20) of variation of pitch, rotationally mobile around an axis OZ, said rotating tube (20) of variation of pitch being rotationally guided integrally with a rotor shaft (7) with respect to a fixed chassis (8) of a gearbox (4),
• guiding (62) the translation of a rod (30) of variation of pitch, translationally mobile along said axis OZ with respect to said fixed chassis (8) of said gearbox (4), and
using (63) a bearing (40) of variation of pitch comprising an inside ring (41), an outside ring (42) and a plurality of rolling elements (43) interposed between said inside ring (41) and said outside ring (42), said bearing (40) of variation of pitch cooperating both with said rod (30) of variation of pitch and said rotating tube (20) of variation of pitch, said bearing (40) of variation of pitch being configured to transmit a translation movement along said axis OZ of said rod (30) of variation of pitch to said rotating tube (20) of variation of pitch, said bearing (40) of variation of pitch being configured so that a translation from one free end (31) of said rod (30) of variation of pitch
drives said outside ring (42) of said bearing (40) of variation of pitch in translation and so that a translation of said inside ring (41) of said bearing (40) of variation of pitch drives a second free end (21) of said rotating tube (20) of variation of pitch in translation, said method (60) of variation of pitch comprising a lubrication step (64) for piping a lubrication fluid at said bearing (40) of variation of pitch, **characterised in that** said lubrication step (64) comprises a first step (70) of circulation by gravity of said lubrication fluid from an external cylindrical face (36) of axis OZ of an external protuberance (32) of said rod (30) of variation of pitch to an internal cavity (33) of said rod (30) of variation of pitch.

13. Method of variation according to claim 12,
**characterised in that** said lubrication step (64) comprises a second step (71) of circulation using a centrifugal force to pipe said lubrication fluid from a hollow portion (22) of said rotating tube (20) of variation of pitch to said inside ring (41) of said bearing (40) of variation of pitch.

14. Method of variation according to either one of claims 12 to 13, **characterised in that** said lubrication step (64) comprises a third step (72) of circulation by gravity of said lubrication fluid from an internal cylindrical face (39) of axis OZ of an external protuberance (32) of said rod (30) of variation of pitch to an external cylindrical face (36) of axis OZ of said external protuberance (32).
